# EUROPÄISCHE PATENTSCHRIFT

(11) **EP 0 844 421 B1**
(45) Veröffentlichungstag und Bekanntmachung des Hinweises auf die Patenterteilung: **31.10.2001**
(21) Anmeldenummer: 97114708.7
(22) Anmeldetag: 25.08.1997
(51) Int. Cl.: F16K 11/074

(54) **Steuerpatrone für eine Mischarmatur**
Cartridge for a mixing valve
Cartouche pour un mitigeur.

(30) Priorität: 20.11.1996 CH 285996
(43) Veröffentlichungstag der Anmeldung: 27.05.1998
(73) Patentinhaber: KWC AG, CH-5726 Unterkulm (CH)
(72) Erfinder: Graber, Heinz, 5727 Oberkulm (CH)
(74) Vertreter: Patentanwälte Schaad, Balass, Menzl & Partner AG

(56) Entgegenhaltungen:
- EP-A- 0 063 627
- CH-A- 686 639
- DE-A- 4 338 701
- GB-A- 1 462 765

## Beschreibung

Die vorliegende Erfindung betrifft eine Steuerpatrone für eine insbesondere sanitäre Mischarmatur, gemäss dem Oberbegriff des Anspruchs 1.

Eine Steuerpatrone dieser Art ist beispielsweise aus der CH-Patentschrift Nr. 686 639 bekannt. In einem Patronengehäuse ist eine zwei Einlassdurchlässe und einen Auslassdurchlass aufweisende Ventilsitzscheibe gehäusefest angeordnet. Die Einlassdurchlässe sind mit am Patronengehäuse angeformten Einlassöffnungen für Kalt- und Warmwasser und der Auslassdurchlass mit einer Auslassöffnung verbunden. An der Ventilsitzscheibe liegt eine um eine zentrale Drehachse der Steuerpatrone drehbare Steuerscheibe an, die einen mit beiden Einlassdurchlässen in Überlappung bringbaren Steuerdurchlass und einen mit dem Auslassdurchlass der Ventilsitzscheibe in Überlappung stehenden Auslassdurchbruch aufweist. Auf der der Ventilsitzscheibe abgewandten Seite ist unmittelbar an die Steuerscheibe angrenzend ein Verteilelement angeordnet, welches zusammen mit der Steuerscheibe einen Misch- und Umlenkraum begrenzt und das an einem sektorartigen Abschnitt eine der Steueröffnung gegenüberliegende Profilierung aufweist, um in Abhängigkeit von der Drehlage des Verteilelements bezüglich der Steuerscheibe den maximalen Durchfluss durch die Steuerpatrone zu begrenzen.

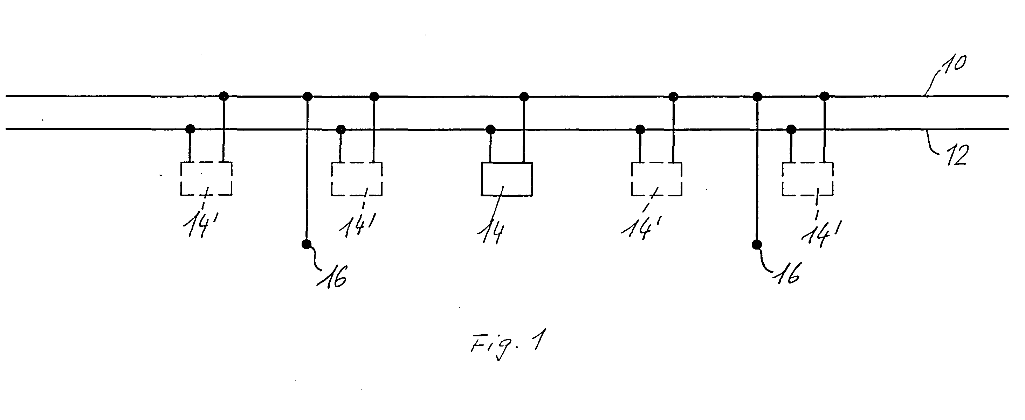

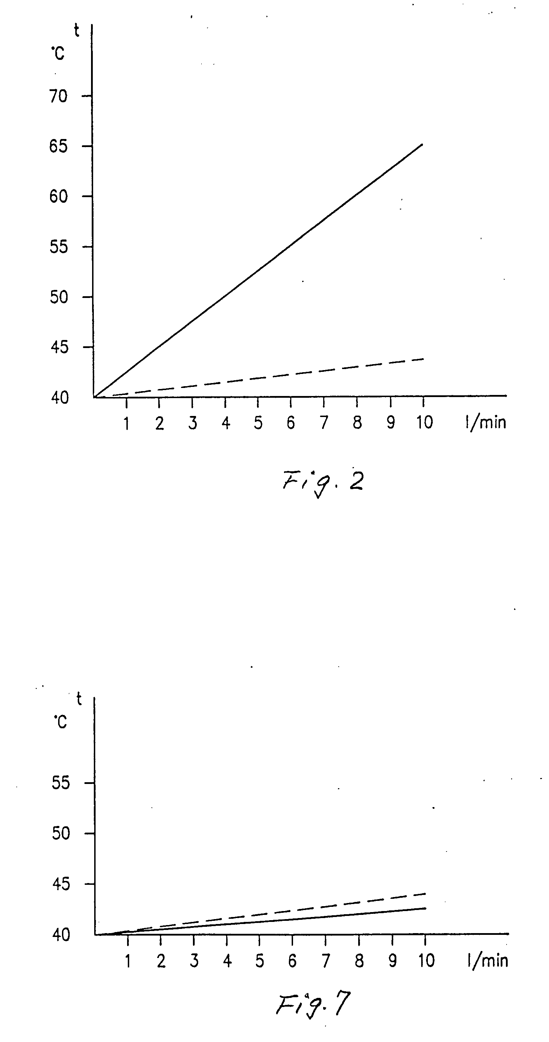

Der dieser bekannten Steuerpatrone anhaftende Nachteil wird nun anhand der Fig. 1 und 2 dargelegt. Fig. 1 zeigt schematisch eine sanitäre Versuchsinstallation mit einer Speiseleitung 10 für Kaltwasser und einer Speiseleitung 12 für Warmwasser. An diese Speiseleitungen 10, 12 sind mehrere Einhebel-Mischarmaturen 14, 14' mit je einer Steuerpatrone der bekannten Art angeschlossen. Weiter hängen an der Speiseleitung 10 für Kaltwasser zwei WC-Spülungen 16. Das Diagramm der Fig. 2 zeigt die Temperaturdrift des an der in der Fig. 1 mit ausgezogenen Linien gezeigten Einhebel-Mischarmatur 14 in Abhängigkeit von der an einer der weiteren Einhebel-Mischarmaturen 14' oder einer WC-Spülung 16 gezapften Kaltwassermenge pro Minute, wobei die Einhebel-Mischarmatur 14 auf eine Mischwassertemperatur von 40°C eingestellt ist. Ist das Verteilelement bezüglich der Steuerscheibe derart eingestellt, dass keine Drosselwirkung eintritt, ergeben sich die in der Fig. 2 mit einer gestrichelten Linie dargestellten Verhältnisse. Die Temperatur des aus der Einhebel-Mischarmatur 14 ausfliessenden Wassers nimmt nur unwesentlich zu, wenn an einer weiteren Stelle Kaltwasser gezapft wird. Wird aber der Wasserdurchfluss auf etwa die Hälfte des maximalen Durchflusses, beispielsweise 7,5 Liter pro Minute begrenzt, ergeben sich die mit einer ausgezogenen Linie gezeigten Verhältnisse. Bei begrenztem Wasserdurchfluss kann somit die Temperatur des aus der Einhebel-Mischarmatur 14 austretenden Wassers, wenn aus der Speiseleitung 10 an einer weiteren Stelle Wasser gezapft wird, erheblich stärker ansteigen, was die Gefahr des Verbrühens mit sich ziehen kann. Analoges passiert, wenn zusätzlich nicht Kaltwasser sondern Warmwasser gezapft wird. In diesem Fall sinkt die Temperatur des aus der Einhebel-Mischarmatur 14 ausströmenden Wassers. Diese Temperaturänderungen sind der Verminderung des Wasserdrucks in der betreffenden Speiseleitung 10, 12 bei zusätzlichem Zapfen von Wasser zuzuschreiben.

Eine weitere Einhebel-Mischarmatur mit einstellbaren Drosselungsmitteln zur Begrenzung der durch die Ausflussöffnung fliessenden maximalen Wassermenge pro Zeiteinheit ist aus der DE-OS 43 38 701 bekannt. Diese weist eine gehäusefeste Ventilsitzscheibe mit einem zentrisch angeordneten Auslassdurchlass und zwei in einem radial Abstand zu diesem angeordneten Einlassdurchlässen auf, die mit den Einlassöffnungen für Kalt- bzw. Warmwasser des Gehäuses strömungsverbunden sind. An der Ventilsitzscheibe ist eine um die Mittelachse drehbare Steuerscheibe dichtend angelagert, die einen Steuerdurchlass aufweist, der mit beiden Einlassdurchlässen in Überlappung bringbar ist und der durch das Zentrum verläuft und somit dauernd mit dem Auslassdurchlass in Verbindung steht. Ein zapfenartiger Drosselkörper ist entlang der Drehachse verschiebbar, der zum Begrenzen des maximalen Wasserdurchflusses mit dem als Drosselsitz ausgebildeten Auslassdurchlass der Ventilsitzscheibe zusammenwirkt.

Ausgehend von diesem Stand der Technik ist es eine Aufgabe der vorliegenden Erfindung, eine gattungsgemässe Steuerpatrone derart weiterzubilden, dass speiseseitige Druckunterschiede, unabhängig von der Einstellung von Drosselungsmitteln, die Temperatur des ausfliessenden Mediums unwesentlich beeinflussen.

Diese Aufgabe wird mit einer gattungsgemässen Steuerpatrone gelöst, die die Merkmale im Kennzeichen des Anspruchs 1 aufweist. Erfindungsgemäss wird der maximale Mediumdurchfluss durch separate Drosselung des zuströmenden kalten und des zuströmenden warmen Mediums begrenzt. Dies im Gegensatz zu den eingangs erwähnten Einhebel-Mischarmaturen, wo der maximale Mediumdurchfluss durch Drosselung des Mischmediums begrenzt wird.

Bevorzugte Ausbildungsformen der erfindungsgemässen Steuerpatrone sind in den abhängigen Ansprüchen definiert.

Die vorliegende Erfindung wird nun anhand in der Zeichnung dargestellten Ausführungsbeispielen näher erläutert. Es zeigen rein schematisch:
- Fig. 1: ein Schema einer sanitären Versuchsinstallation mit mehreren, eine bekannte Steuerpatrone aufweisenden Mischarmaturen und WC-Spülungen;
- Fig. 2: ein Diagramm, aus dem die Temperaturdrift des aus einer Mischarmatur ausfliessenden Wassers hervorgeht, wenn an einer weiteren Stelle Kaltwasser gezapft wird;
- Fig. 3: eine erfindungsgemässe Steuerpatrone im Längsschnitt entlang der Linie III-III der Fig. 4 bei nichtbegrenztem Wasserdurchfluss;
- Fig. 4: die in der Fig. 3 gezeigte Steuerpatrone im Querschnitt entlang der Linie IV-IV der Fig. 3;
- Fig. 5: in gleicher Darstellung wie Fig. 3 die dort gezeigte Steuerpatrone bei auf ein Minimum begrenztem Wasserdurchfluss;
- Fig. 6: in gleicher Darstellung wie Fig. 4 die Steuerpatrone bei auf ein Minimum begrenztem Wasserdurchfluss;
- Fig. 7: in gleicher Darstellung wie Fig. 2 die Temperaturdrift des aus der in den Fig. 3 bis 6 gezeigten Steuerpatrone ausfliessenden Mischwassers in Abhängigkeit von der an benachbarten Stellen aus der Speiseleitung für Kaltwasser gezapften Wassermenge pro Zeiteinheit in einer Versuchsinstallation gemäss Fig. 1; und
- Fig. 8: ein Teil der in den Fig. 3 bis 6 gezeigten Steuerpatrone mit unterschiedlich ausgebildeten Steuerdurchlässen und Drosselkörper.

Die in den Fig. 3 bis 6 gezeigte Steuerpatrone weist einen im wesentlichen becherförmigen speiseseitigen Gehäuseteil 18 und einen in diesen eingesetzten, im wesentlichen zylinderförmigen bedienungsseitigen Gehäuseteil 20 auf. Die Mittelachse des aus den beiden Gehäuseteilen 18, 20 gebildeten Gehäuses 22 ist mit 22' bezeichnet. Der Boden 24 des speiseseitigen Gehäuseteils 18 weist eine Einlassöffnung 26 für Kaltwasser, eine Einlassöffnung 28 für Warmwasser sowie eine Auslassöffnung 30 auf. Die Steuerpatrone ist dazu bestimmt, in bekannter Art und Weise in eine Aufnahmeausnehmung eines Gehäuses einer Einhebel-Mischarmatur eingesetzt und dort befestigt zu werden, derart, dass die Einlassöffnungen 26, 28 mit einer Speiseleitung für Kalt- bzw. für Warmwasser und die Auslassöffnung 30 mit einem Auslassstutzen der Einhebel-Mischarmatur in Strömungsverbindung stehen.

In den speiseseitigen Gehäuseteil 18 ist eine Ventilsitzscheibe 32 aus Keramik eingesetzt, die am Boden 24 anliegt und einen mit der Einlassöffnung 26 strömungsverbundenen Einlassdurchlass 34 für Kaltwasser, einen mit der Einlassöffnung 28 strömungsverbundenen Einlassdurchlass 36 für Warmwasser sowie einen mit der Auslassöffnung 30 kommunizierenden Auslassdurchlass 38 aufweist. Beidseitig des Bodens 24 sind in diesem Nuten 40 angeformt, die um die Einlassöffnungen 26, 28 und die Auslassöffnung 30 verlaufen und in die Dichtungselemente 42 eingesetzt sind, um zwischen dem Boden 24 und einerseits der Ventilsitzscheibe 32 und andererseits des nicht gezeigten Gehäuses der Einhebel-Mischarmatur zu dichten. Die Ventilsitzscheibe 32 ist mittels einer Nase-Nut-Verbindung 44 bezüglich des speiseseitigen Gehäuseteils 18 gegen Verdrehung gesichert.

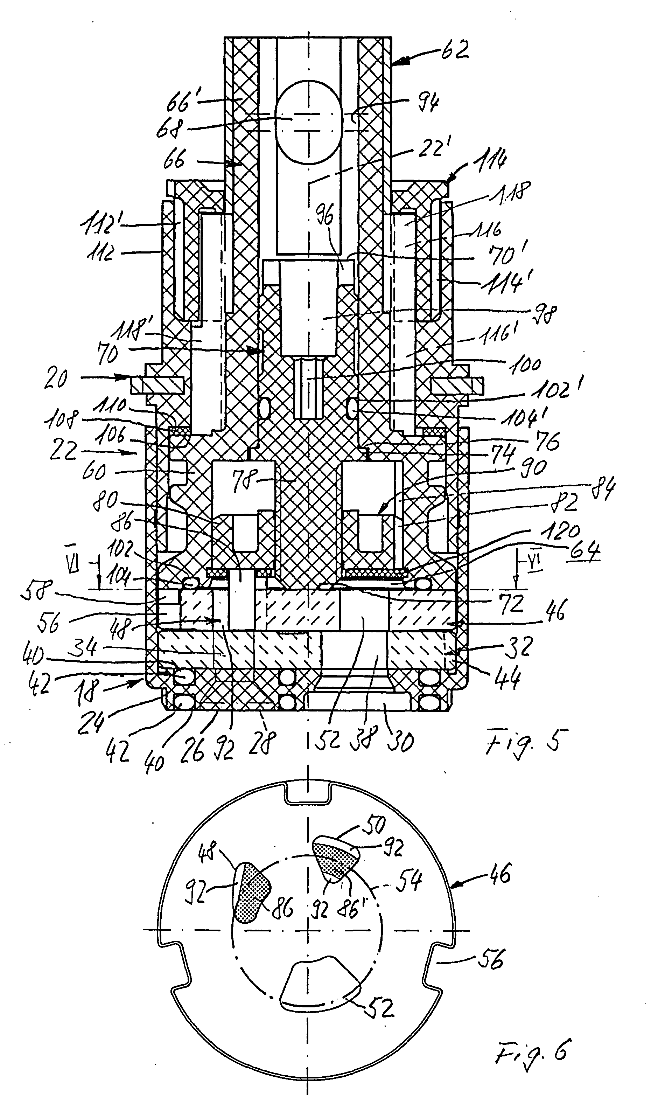

Auf der dem Boden 24 und somit den Einlassöffnungen 26, 28 und der Auslassöffnung 30 abgewandten Seite der Ventilsitzscheibe 32 liegt an dieser eine Steuerscheibe 46 aus Keramik dichtend an. Diese weist einen Steuerdurchlass 48 für Kaltwasser, einen von diesem getrennten Steuerdurchlass 50 für Warmwasser und einen Auslassdurchbruch 52 auf, die dazu bestimmt sind, mit den entsprechenden Einlassdurchlässen 34, 36 bzw. dem Auslassdurchlass 38 der Ventilsitzscheibe 32 zusammen zu wirken. Zu diesem Zweck sind die Einlassöffnungen 26, 28 und die Auslassöffnung 30 sowie die Steuerdurchlässe 48, 50 und der Auslassdurchbruch 52 annähernd auf einer in der Fig. 6 angedeuteten Kreislinie 54 um die Achse 22' angeordnet.

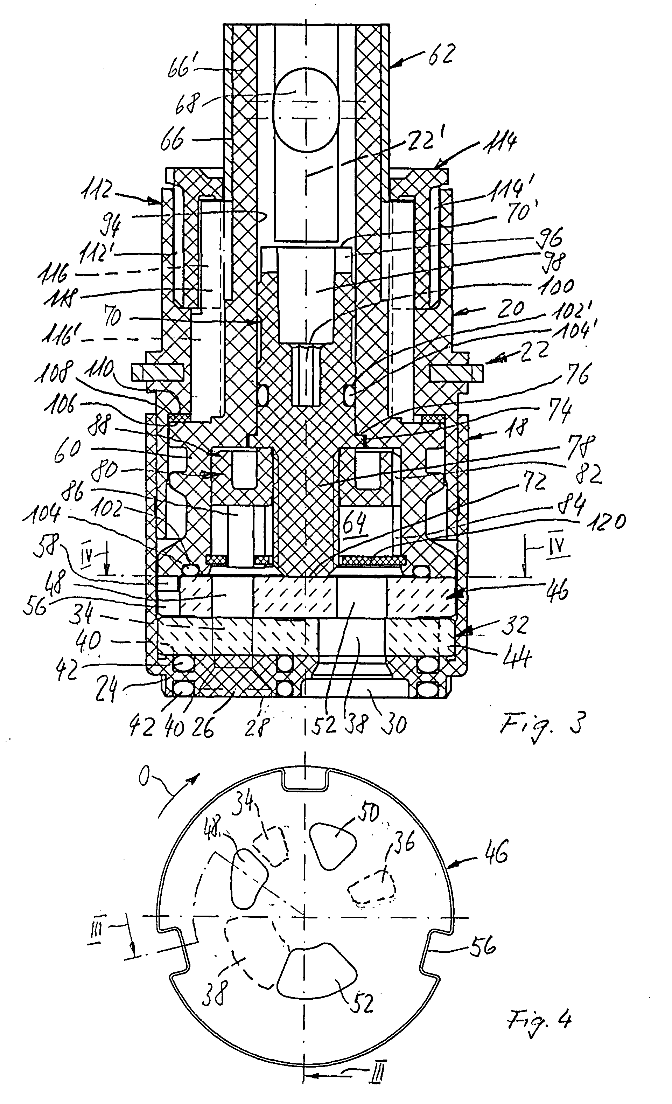

Wie dies insbesondere den Fig. 4 und 6 entnehmbar ist, weist die Steuerscheibe 46 umfangsseitig verteilt drei Ausnehmungen 56 auf, in die stirnseitige Mitnehmernasen 58 einer glockenartigen Erweiterung 60 eines Betätigungselements 62 eingreifen. Dieses weist anschliessend an die einen Misch- und Umlenkraum 64 begrenzende glockenartige Erweiterung 60 einen Schaftteil 66 auf, der in seinen von der Steuerscheibe 46 entfernten Endbereich 66' eine durchgehende radiale Öffnung 68 aufweist. Diese Öffnung 68 ist dazu bestimmt, einen Betätigungshebel zum Drehen des Betätigungselements 62 und somit der Steuerscheibe 46 um die Achse 22' aufzunehmen. Der Betätigungshebel kann eine grosse Länge aufweisen, um die Steuerpatrone mittels eines Arms und mit kleiner Kraft betätigen zu können.

Der Schaftteil 66 ist hohlzylinderförmig ausgebildet und in ihm ist ein im wesentlichen zylinderförmiges Einstellelement 70 drehbar gelagert. Das Einstellelement 70 liegt mit seiner der Steuerscheibe 46 zugewandten Stirnseite 72 an diesem an und weist im Mittelbereich einen in Richtung gegen aussen vorstehenden umlaufenden Wulst 74 auf, der sich mit seiner der Steuerscheibe 46 abgewandten Seite an einer Schulter 76 des Betätigungselements 62 abstützt. Dadurch ist das Einstellelement 70 in axialer Richtung ortsfest gehalten.

Zwischen dem Wulst 74 und der Stirnseite 72 ist das Einstellelement 70 als Gewindeschaft 78 ausgebildet, auf dem in der Art einer Laufmutter ein Tragteil 80 sitzt. Der Aussendurchmesser des ringartigen Tragteils 80 entspricht im wesentlichen der lichten Weite der Erweiterung 60 und weist am Aussenumfang eine in Richtung der Achse 22' verlaufende Führungsnut 82 auf, in die ein in axialer Richtung verlaufender Führungswulst 84 an der Innenseite der Erweiterung 60 eingreift. Dadurch ist das im Misch- und Umlenkraum 64 angeordnete Tragteil 80 verdrehsicher, aber in Richtung der Achse 22' verschiebbar geführt. Am Tragteil 80 sind zwei profilförmige Drosselkörper 86, 86' angeformt, die von diesem in Richtung gegen die Steuerscheibe 46 hin abstehen. Sie fluchten in Richtung der Achse 22' gesehen mit den Steuerdurchlässen 48 und 50 und sind aus einer in der Fig. 3 gezeigten Ruhelage 88, in welcher sie von der Steuerscheibe 46 beabstandet sind, stufenlos durch Drehen des Einstellelements 70 bezüglich des Betätigungselements 62 bis in eine maximale Drosselstellung 90 verbringbar, die in Fig. 5 gezeigt ist. Wie dies dieser Figur entnehmbar ist, befinden sich in maximaler Drosselstellung 90 die Stirnseiten am freien Ende der in die Steuerdurchlässe 48, 50 eingreifenden Drosselkörper 86, 86' in geringem Abstand zur Ventilsitzscheibe 32, ohne an dieser anzustehen, oder in die Einlassdurchlässe 34, 36 einzugreifen. Wie dies Fig. 6 zeigt, weisen die Drosselkörper 86, 86' einen derartigen Querschnitt auf, dass sie in Drosselstellung zusammen mit den Mantelflächen der Steuerdurchlässe 48, 50 wenigstens annähernd in Umfangsrichtung und somit wenigstens annähernd entlang von Kreislinien um die Drehachse 22' verlaufende Strömungsspalte 92 begrenzen. Durch entsprechende Verschiebung der Drosselkörper 86, 86' in Richtung der Achse 22' kann die maximale aus der Steuerpatrone ausfliessende Wassermenge pro Zeiteinheit stufenlos zwischen zwei Extremwerten eingestellt werden. Befinden sich die Drosselkörper 86, 86' in Ruhelage 88, ist der maximale Wasserdurchfluss ungedrosselt und entspricht dem Wasserdurchfluss für den die Steuerpatrone ausgelegt ist. In maximaler Drosselstellung 90 ist hingegen der Wasserdurchfluss auf beispielsweise 50 % reduziert.

Auf der dem Gewindeschaft 78 abgewandten Seite des Wulstes 74 ist das Einstellelement 70 an der Innenwand 94 des Schaftteils 66 drehbar geführt. An seinem der Stirnseite 72 abgewandten Ende 70' weist das Einstellelement 70 einen Radialschlitz 96 auf, in den zum Drehen des Einstellelements 70 und somit Einstellen der Lage der Drosselkörper 86, 86' ein Schraubendreher einsteckbar ist. Weiter weist das Einstellelement 70 vom Ende 70' her eine sacklochartige Ausnehmung 98 auf, von deren Boden eine Sechskantausnehmung 100 ausgeht. In diese kann zum Drehen des Einstellelements 70 ein Imbusschlüssel gesteckt werden.

Um den Austritt von Wasser aus dem Misch- und Umlenkraum 74 zu verhindern, weist einerseits die glockenartige Erweiterung 60 stirnseitig eine umlaufende Nut 102 auf, in die ein an der Steuerscheibe 46 anliegender Dichtring 104 eingesetzt ist, und andererseits das Einstellelement 70 zwischen dem Wulst 74 und dem Ende 70' eine umfangsseitige Nut 102' auf, in die ein weiterer Dichtring 104' eingelegt ist, der an der Innenwand 94 des Betätigungselements 62 anliegt.

Das Betätigungselement 62 weist im Bereich des Übergangs von der glockenartigen Erweiterung 60 zum Schaftteil 66 eine Schulter 106 auf, die an einem Gleitring 108 anliegt, der andererseits an einer Gegenschulter 110 des bedienungsseitigen Gehäuseteils 20 anliegt und dadurch frei drehbar aber in axialer Richtung in Anlage an der Steuerscheibe 46 gehalten ist.

Der bedienungsseitige Gehäuseteil 20 weist in seinem dem speiseseitigen Gehäuseteil 18 abgewandten Endbereich 112 eine Innenverzahnung 112' auf, die dazu bestimmt ist, mit der Aussenverzahnung 114' eines in axialer Richtung in den Endbereich 112' einschiebbaren hülsenartigen Temperaturbegrenzungsrings 114 zusammenzuwirken. Radial innen weisen sowohl der Temperaturbegrenzungsring 114 als auch der bedienungsseitige Gehäuseteil 20, dieser im Bereich zwischen der Gegenschulter 110 und dem Endbereich 112, jeweils einander diametral gegenüberliegende Begrenzungsanschläge 116 bzw. 116' auf. Diese sind dazu bestimmt, mit einander diametral gegenüberliegenden, vom Schaftteil 66 in radialer Richtung gegen aussen vorstehenden Begrenzungsgegenanschlägen 118 zusammenzuwirken. Sind die Begrenzungsanschläge 116, 116' aufeinander ausgerichtet, ist die Temperatur des aus der Steuerpatrone ausfliessenden Wassers nicht begrenzt. Wird hingegen der Temperaturbegrenzungsring 114 in eine von dieser Lage unterschiedliche Drehlage verbracht, kann das Betätigungselement 62 nur noch in einem eingeschränkten Winkelbereich gedreht werden, so dass, wie dies nun folgend näher erläutert ist, die maximale Temperatur des ausfliessenden Wassers begrenzt ist.

In den Fig. 4 und 6 ist die Steuerscheibe 46 in Schliessstellung der Steuerpatrone gezeigt. In dieser Stellung sind die Einlassdurchlässe 34, 36 und die Steuerdurchlässe 48, 50 ausser Überlappung. Es kann somit kein Wasser von den Einlassöffnungen 26, 28 zur Auslassöffnung 30 fliessen. Wird nun ausgehend von dieser Schliessstellung die Steuerscheibe 46 in Pfeilrichtung O gedreht, kommt zuerst der Steuerdurchlass 48 mit dem Einlassdurchlass 34 für Kaltwasser in Überlappung. Bei kontinuierlichem Drehen in Richtung O nimmt somit der Kaltwasserfluss bis zu einem Maximum zu. Überlappen sich der Einlassdurchlass 34 und der Steuerdurchlass 48 vollständig und wird die Steuerscheibe 46 weiter gedreht, kommt der Steuerdurchlass 50 mit dem Einlassdurchlass 36 für Warmwasser in Überlappung. Bei steigender Überlappung nimmt der Warmwasserfluss zu und gleichzeitig wird der Kaltwasserfluss vorzugsweise entsprechend der Zunahme des Warmwasserflusses verringert. Dies wird in bekannter Art und Weise durch die Formgebung der Durchlässe 34, 36, 48, 50 gewährleistet. Schlussendlich fliesst nur noch Warmwasser, und der Kaltwasserfluss ist unterbunden. Wird nun durch Einstellen des Temperaturbegrenzungsrings 114 die Drehung der Steuerscheibe 46 in Richtung des Pfeiles O begrenzt, wird dadurch auch die maximale Temperatur des aus der Auslassöffnung 30 fliessenden Mischwassers begrenzt.

Der Vollständigkeit halber sei erwähnt, dass die Drosselkörper 86 ein ringscheibenartiges Siebelement 120 durchgreifen, das an der Erweiterung befestigt und im Abstand zur Steuerscheibe 46 angeordnet ist. Das Siebelement 120 trägt zur Druckstossverminderung, Lärmverminderung und zur Durchmischung der aus den Steuerdurchlässen 48, 50 austretenden Kalt- und Warmwasserströme bei.

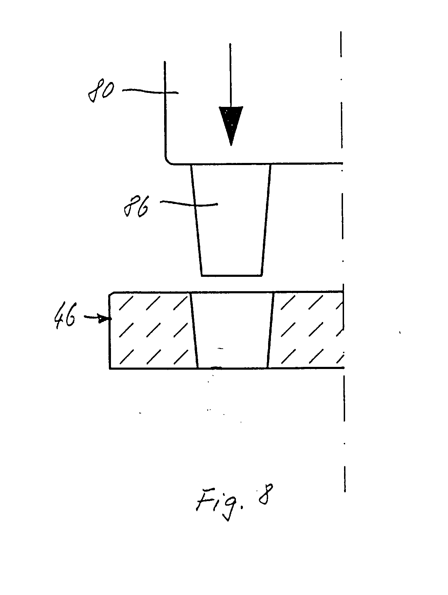

Die vorteilhafte Wirkung der erfindungsgemässen Drosselungsmittel geht aus dem Diagramm der Fig. 7 im Vergleich mit jenem der Fig. 2 hervor. Ist bei der in der Fig. 1 gezeigten Versuchsinstallation die Einhebel-Mischarmatur 14 mit einer erfindungsgemässen Steuerpatrone ausgerüstet und befindet sich der Tragteil 80 mit den Drosselkörpern 86 in Ruhelage 88, verhält sich die Einhebel-Mischarmatur 14 im wesentlichen gleich, wie die aus der CH-Patentschrift Nr. 686 639 bekannte Steuerpatrone (siehe gestrichelte Linie). Werden nun die Drosselkörper 86 in die in der Fig. 5 gezeigte maximale Drosselstellung 90 verbracht, verhält sich die Steuerpatrone gemäss der in Fig. 7 ausgezogenen Linie. In Drosselstellung ist somit die Mischwassertemperatur weniger empfindlich gegenüber Druckänderungen in den Speiseleitungen 10, 12, als dies in nicht gedrosseltem Zustand der Fall ist.

Fig. 8 zeigt eine weitere mögliche Ausbildungsform der Steuerscheibe 46 und der am Tragteil 80 angeformten Drosselkörper 86, 86'. Bei dieser Ausbildungsform sind die Einlassdurchlässe 34, 36 in Richtung gegen den Tragteil 80 hin im Querschnitt sich erweiternd ausgebildet, wogegen die Drosselkörper 86 entgegengesetzt verjüngend ausgebildet sind.

Es ist auch denkbar, dass die Ventilsitzscheibe 32 und die Steuerscheibe 46 keinen Auslassdurchlass 38 bzw. Auslassdurchbruch 52 aufweisen. Auch bei diesen Steuerpatronen, in welchen das Wasser im wesentlichen in axialer Richtung hindurchfliesst, ist das erfindungsgemässe Prinzip zur Begrenzung des maximalen Wasserdurchflusses anwendbar.

Die erfindungsgemässe Steuerpatrone wurde am Beispiel einer Steuerpatrone für eine sanitäre Einhebel-Mischarmatur dargelegt. Es ist aber auch möglich, Steuerpatronen der erfindungsgemässen Art für unterschiedliche fliessfähige Medien auszubilden.

## Patentansprüche

1. Steuerpatrone für eine insbesondere sanitäre Mischarmatur, mit einem je eine Einlassöffnung (26,28) für das kalte und das warme Medium sowie eine Auslassöffnung (30) aufweisenden Gehäuse (22), in dem eine Ventilsitzscheibe (32) gehäusefest angeordnet ist, an der eine mittels eines Betätigungselements (62) um eine Drehachse (22') drehbare Steuerscheibe (46) dichtend angelagert ist, wobei die Ventilsitzscheibe (32) mit den Einlassöffnungen (26,28) in Verbindung stehende Einlassdurchlässe (34,36) aufweist, welche andererseits mit wenigstens einem Steuerdurchlass (48,50) der Steuerscheibe (46) in Ueberlappung bringbar sind, und mit einstellbaren Drosselungsmitteln zur Begrenzung der durch die Auslassöffnung (30) fliessenden maximalen Mediumdurchflusses, **dadurch gekennzeichnet, dass** die Steuerscheibe (46) zwei den Einlassdurchlässen (34,36) zugeordnete Steuerdurchlässe (48,50) aufweist, und die Drosselungsmittel zwei wenigstens annähernd in Richtung der Drehachse (22') verstellbare, mit der Steuerscheibe (46) drehfest verbundene Drosselkörper (86, 86') aufweist, die mit den als Drosselsitze ausgebildeten Steuerdurchlässen (48,50) zusammenwirken.

2. Steuerpatrone nach Anspruch 1, **dadurch gekennzeichnet, dass** die Drosselkörper (86) gemeinsam verstellbar sind.

3. Steuerpatrone nach Anspruch 1 oder 2, **dadurch gekennzeichnet, dass** die Drosselkörper (86, 86') in einer Drosselstellung (90) in die Steuerdurchlässe (48,50) eingreifen.

4. Steuerpatrone nach einem der Ansprüche 1 bis 3, **dadurch gekennzeichnet, dass** die Steuerdurchlässe (48, 50) und die sich in einer Drosselstellung (90) befindlichen Drosselkörper (86, 86') Strömungsspalte (92) begrenzen, die wenigstens annähernd bezüglich der Drehachse (22') in tangentialer Richtung verlaufen.

5. Steuerpatrone nach einem der Ansprüche 1 bis 4, **dadurch gekennzeichnet, dass** die beiden Drosselkörper (86, 86') an einem gemeinsamen Tragteil (80) angeordnet, vorzugsweise an diesem angeformt sind, der mittels eines im Betätigungselement (62) gelagerten Einstellelements (70) in Richtung der Drehachse (22') verstellbar ist.

6. Steuerpatrone nach Anspruch 5, **dadurch gekennzeichnet, dass** das Einstellelement (70) am Betätigungselement (62), in Richtung der Drehachse (22') gesehen ortsfest, drehbar gelagert ist und einen Gewindeschaft (78) aufweist, auf dem das als Laufmutter ausgebildete und am Betätigungselement (62) verdrehsicher geführte Tragteil (80) sitzt.

7. Steuerpatrone nach einem der Ansprüche 1 bis 6, **dadurch gekennzeichnet, dass** die Drosselkörper (86, 86') und/oder die Steuerdurchlässe (48,50) im Querschnitt, vorzugsweise gegengleich sich verjüngend ausgebildet sind.

8. Steuerpatrone nach einem der Ansprüche 1 bis 7, **dadurch gekennzeichnet, dass** die Steuerscheibe (46) einen Auslassdurchbruch (52) und die Ventilsitzscheibe (32) einen Auslassdurchlass (38) aufweisen, die in Offenstellung der Patrone miteinander in Ueberlappung stehend, das Betätigungselement (62) in Richtung zur Steuerscheibe (46) glockenartig, einen Misch- und Umlenkraum (64) begrenzend ausgebildet ist und die Drosselkörper (86, 86') im Misch- und Umlenkraum (64) angeordnet sind und von diesem her mit den Steuerdurchlässen (48,50) in Eingriff bringbar sind.

9. Steuerpatrone nach einem der Ansprüche 1 bis 8, **dadurch gekennzeichnet, dass** die Einlassdurchlässe (34,36) sowie die Steuerdurchlässe (48,50) auf einer gemeinsamen Kreislinie (54) um die Drehachse (22') derart angeordnet sind, dass in Oeffnungsrichtung (O) nacheinander die Kaltmediumzufuhr bis zum Maximum freigegeben wird, danach zusätzlich die Warmmediumzufuhr freigegeben wird und anschliessend die Kaltmediumzufuhr verringert wird.

## Claims

1. Control cartridge for an, in particular, sanitary mixer fitting, having a housing (22) which has in each case one inlet opening (26, 28) for the cold medium and the hot medium as well as an outlet opening (30) and in which there is arranged a valve-seat disc (32), which is fixed to the housing and on which a control disc (46), which can be rotated about an axis of rotation (22') by means of an actuating element (62), is mounted with sealing action, the valve-seat disc (32) having inlet through-passages (34, 36) which are in connection with the inlet openings (26, 28) and can also be made to overlap with at least one control through-passage (48, 50) of the control disc (46), and having adjustable restricting means for limiting the maximum throughflow of medium flowing through the outlet opening (30), **characterized in that** the control disc (46) has two control through-passages (48, 50) assigned to the inlet through-passages (34, 36), and the restricting means have two restricting elements (86, 86') which can be adjusted more or less in the direction of the axis of rotation (22'), are connected in a rotationally fixed manner to the control disc (46) and interact with the control through-passages (48, 50), which are designed as restricting seats.

2. Control cartridge according to Claim 1, **characterized in that** the restricting elements (86) can be adjusted jointly.

3. Control cartridge according to Claim 1 or 2, **characterized in that**, in a restricting position (90), the restricting elements (86, 86') engage in the control through-passages (48, 50).

4. Control cartridge according to one of Claims 1 to 3, **characterized in that** the control through-passages (48, 50) and the restricting elements (86, 86') located in a restricting position (90) bound flow gaps (92) which run in the tangential direction at least more or less in relation to the axis of rotation (22').

5. Control cartridge according to one of Claims 1 to 4, **characterized in that** the two restricting elements (86, 86') are arranged, preferably integrally formed, on a common carrying part (80) which can be adjusted in the direction of the axis of rotation (22') by means of an adjusting element (70) mounted in the actuating element (62).

6. Control cartridge according to Claim 5, **characterized in that** the adjusting element (70) is mounted on the actuating element (62) in a rotatable manner, but such that it is stationary as seen in the direction of the axis of rotation (22'), and has a threaded shank (78) on which is seated the carrying part (80), which is designed as a running nut and is guided in a rotationally fixed manner on the actuating element (62).

7. Control cartridge according to one of Claims 1 to 6, **characterized in that** the restricting elements (86, 86') and/or the control through-passages (48, 50) are cross-sectionally designed to taper preferably in the same way in opposite directions.

8. Control cartridge according to one of Claims 1 to 7, **characterized in that** the control disc (46) has an outlet aperture (52) and the valve seat disc (32) has an outlet through-passage (38), the aperture and through-passage overlapping one another in the open position of the cartridge, the actuating element (62) is designed in a bell-like manner, such that it bounds a mixing and deflecting space (64), in the direction of the control disc (46), and the restricting elements (86, 86') are arranged in the mixing and deflecting space (64) and can be brought into engagement with the control through-passages (48, 50) from there.

9. Control cartridge according to one of Claims 1 to 8, **characterized in that** the inlet through-passages (34, 36) and the control through-passages (48, 50) are arranged on a common circle line (54) around the axis of rotation (22') such that, one after the other in the opening direction (O), the cold-medium feed is released to the maximum extent, then the hot-medium feed is released in addition and, subsequently, the cold-medium feed is reduced.

## Revendications

1. Cartouche pour un mitigeur, en particulier sanitaire, avec un corps (22), présentant respectivement une ouverture d'admission (26, 28) pour le fluide froid et le fluide chaud, ainsi qu'une ouverture d'échappement (30), et dans lequel est disposé un disque de siège de soupape (32) solidaire du corps, disque sur lequel est monté de manière étanche un disque de commande (46) pouvant tourner autour d'un axe de rotation (22') au moyen d'un élément de manoeuvre (62), le disque de siège de soupape (32) présentant des passages d'admission (34, 36) en liaison avec les ouvertures d'admission (26, 28) et qui peuvent être par ailleurs amenés en recouvrement avec au moins un passage de commande (48, 50) du disque de commande (46), et avec des moyens d'étranglement réglables pour limiter le débit maximal de fluide s'écoulant au travers de l'ouverture d'échappement (30), **caractérisée en ce que** le disque de commande (46) présente deux passages de commande (48, 50) associés aux passages d'admission (34, 36), et **en ce que** les moyens d'étranglement présentent deux corps d'étranglement (86, 86'), assemblés de façon solidaire en rotation avec le disque de commande (46), pouvant se déplacer au moins approximativement en direction de l'axe de rotation (22'), et concourant avec les passages de commande (48, 50) réalisés sous forme de sièges d'étranglement.

2. Cartouche suivant la revendication 1, **caractérisée en ce que** les corps d'étranglement (86) peuvent être déplacés conjointement.

3. Cartouche suivant l'une des revendications 1 et 2, **caractérisée en ce que** les corps d'étranglement (86, 86') s'engagent dans les passages de commande (48, 50) dans une position de laminage (90).

4. Cartouche Suivant l'une des revendications 1 à 3, **caractérisée en ce que** les passages de commande (48, 50) et les corps d'étranglement (86, 86'), situés dans une position de laminage (90), limitent des fentes d'écoulement (92) qui s'étendent dans le sens tangentiel au moins approximativement par rapport à l'axe de rotation (22').

5. Cartouche suivant l'une des revendications 1 à 4, **caractérisée en ce que** les deux corps d'étranglement (86, 86') sont disposés sur un support commun (80), sont de préférence conformés sur ce dernier, qui peut être déplacé en direction de l'axe de rotation (22') au moyen d'un élément de réglage (70) monté dans l'élément de manoeuvre (62).

6. Cartouche suivant la revendication 5, **caractérisée en ce que** l'élément de réglage (70) est monté en rotation sur l'élément de manoeuvre (62), de façon stationnaire vu en direction de l'axe de rotation (22'), et présente une tige filetée (78) sur laquelle repose le support (80) réalisé sous forme d'écrou de roulement et guidé et bloqué en rotation sur l'élément de manoeuvre (62).

7. Cartouche suivant l'une des revendications 1 à 6, **caractérisée en ce que** les corps d'étranglement (86, 86') et/ou les passages de commande (48, 50) ont une réalisation rétrécie en coupe transversale, de préférence contrairement égale.

8. Cartouche suivant l'une des revendications 1 à 7, **caractérisée en ce que** le disque de commande (46) présente une ouverture d'échappement (52) et le disque de siège de soupape (32) un passage d'échappement (38), qui sont en recouvrement mutuel en position d'ouverture de la cartouche, **en ce que** l'élément de manoeuvre (62) est réalisé en forme de cloche en direction du disque de commande (46), en limitant un compartiment de mélange et de renvoi (64), et **en ce que** les corps d'étranglement (86, 86') sont disposés dans le compartiment de mélange et de renvoi (64) et peuvent être amenés en prise à partir de ce dernier avec les passages de commande (48, 50).

9. Cartouche suivant l'une des revendications 1 à 8, **caractérisée en ce que** les passages d'admission (34, 36), ainsi que les passages de commande (48, 50), sont disposés sur une ligne circulaire commune (54) autour de l'axe de rotation (22') de sorte que, dans le sens d'ouverture (O), l'arrivée de fluide froid est successivement libérée jusqu'au maximum, l'arrivée de fluide chaud est ensuite libérée en supplément, puis l'arrivée de fluide froid est réduite.
